Europäisches Patentamt

European Patent Office

Office européen des brevets

(19)

(11) Publication number: **0 041 380**
**B1**

(12) # EUROPEAN PATENT SPECIFICATION

(45) Date of publication of patent specification: **08.08.84**

(51) Int. Cl.³: **C 08 J 9/12 //C08L23/06**

(21) Application number: **81302390.0**

(22) Date of filing: **29.05.81**

(54) **Process for producing polyethylene foams.**

(30) Priority: **29.05.80 JP 72631/80**

(43) Date of publication of application:
**09.12.81 Bulletin 81/49**

(45) Publication of the grant of the patent:
**08.08.84 Bulletin 84/32**

(84) Designated Contracting States:
**DE FR GB IT NL**

(56) References cited:
**DE - B - 1 282 918**
**GB - A - 783 034**
**GB - A - 1 060 412**
**GB - A - 1 063 925**
**GB - A - 1 474 774**
**US - A - 3 251 911**

**CHEMICAL ABSTRACTS, vol. 85, no. 10,
September 6, 1976, page 52, abstract no.
64052f COLUMBUS, Ohio (US)**

(73) Proprietor: **SEKISUI KAGAKU KOGYO KABUSHIKI
KAISHA**
**4-4 Nishitenma 2-chome Kita-ku**
**Osaka shi Osaka (JP)**

(72) Inventor: **Shinkai, Ken**
**18-21, Makinohon-machi, 2-chome**
**Hirakata-shi Osaka-fu (JP)**
Inventor: **Nagai, Takashi**
**155-15, Harimada-cho**
**Moriyama-shi Shiga-ken (JP)**
Inventor: **Kobori, Yoshihito**
**2-2, Hyakuyama Shimamoto-cho**
**Mishima-gun Osaka-fu (JP)**

(74) Representative: **Myerscough, Philip Boyd et al,
J.A. Kemp & Co. 14, South Square Gray's Inn
London, WC1R 5EU (GB)**

Courier Press, Leamington Spa, England.

# 0 041 380

## Description

This invention relates to a process for continuously producing polyethylene foam containing cells of uniform and fine sizes and having excellent surface smoothness.

It has been known to use volatile liquids such as trifluoromethane, monochlorofluoromethane, methyl chloride, pentane and hexane as blowing agents, in the production of polyethylene foams. Polyethylene foams obtained by using these volatile liquids as blowing agents contain large and nonuniform cells.

It is also known to mix polyethylene with a chemically decomposable blowing agent such as azodicarbonamide and azobisisobutyronitrile and extrude and foam the mixture. The process, however, has the defect that depending upon the operating conditions during the extrusion, the blowing agent may decompose within the extruder to make it impossible to give foams of good quality, or the resulting foams give off a strong odor of the blowing agent or are slightly colored.

Chemical Abstracts *85* (10), 52, 64052f describes the preparation of foams by charging polyethylene, sodium bicarbonate and citric acid to an extruder, melting the mix, injecting with compressed nitrogen and discharging to give foams containing fine, uniform, closed cells. The amounts of ingredients are given as 0.01 to 2.0 parts each of sodium bicarbonate and citric acid per 100 parts of polyethylene, and in the only example provided the weight ratio of citric acid to sodium bicarbonate is 1:1.25.

We have found that by employing tartaric acid and by controlling the relative proportion of tartaric acid to a carbonate or bicarbonate, polyethylene foams can be produced which have improved surface smoothness and a finer cellular structure.

According to this invention, there is provided a process for producing a polyethylene foam, which comprises mixing 100 parts by weight of polyethylene with 0.1 to 0.4 part by weight of a carbonate or bicarbonate and 0.01 to 0.1 part by weight of tartaric acid, the weight ratio of tartaric acid to the carbonate or bicarbonate being from 1:4 to 1:10, and extruding the mixture at a temperature above the softening point of the polyethylene using nitrogen gas or carbon dioxide gas as a blowing agent.

The process of this invention can be conveniently used in the production of polyethylene foams having an expansion factor of 1.5 to 5, preferably 2 to 3.

In the process of the invention, a mixture of a carbonate or bicarbonate and tartaric acid (which generates carbon dioxide gas and water by reaction with the carbonate or bicarbonate) is used as a nucleus-forming agent. As a result of using this nucleus-forming agent, nuclei are formed in the foams in the foaming step, and therefore, the cells in the final product are uniform and fine in size.

Examples of the carbonate or bicarbonate are sodium carbonate, potassium carbonate, sodium bicarbonate, potassium bicarbonate, calcium carbonate, copper carbonate, cobalt carbonate, iron carbonate and calcium bicarbonate. Sodium carbonate, potassium carbonate, sodium bicarbonate and potassium bicarbonate are preferred, and sodium bicarbonate is especially preferred.

The tartaric acid and the carbonate or bicarbonate are used in an amount of 0.01 to 0.1 part by weight and 0.1 to 0.4 part by weight, respectively, per 100 parts by weight of polyethylene, and the weight ratio of the tartaric acid to the carbonate or bicarbonate is from 1:4 to 1:10. Polyethylene foams having good quality can be obtained by using the tartaric acid and the carbonate or bicarbonate in the above specified amounts and nitrogen gas or carbon dioxide gas as a blowing agent. It has been found that when the amounts of tartaric acid and the carbonate or bicarbonate are outside the above-specified ranges, or they are within the above-specified ranges but the blowing agent is neither nitrogen gas nor carbon dioxide gas, the cells in the final product are large in size or have poor surface smoothness. The preferred amount of tartaric acid is 0.01 to 0.05 part. The preferred amount of the carbonate or bicarbonate is 0.1 to 0.3 part by weight, especially 0.1 to 0.2 part by weight.

The equilibrium amount of the nitrogen gas or carbon dioxide gas used as a blowing agent adsorbed to the polyethylene depends upon its pressure. Accordingly, a foam having the desired density can be obtained by adjusting the injecting pressure of the gaseous blowing agent introduced into the extruder. Generally, the injecting pressure is adjusted within the range of 5 to 50 kg/cm² (0.5 to 5 MPa). Preferably, when carbon dioxide gas is used as a blowing agent, its injecting pressure is in the range of 10 to 20 kg/cm², (1 to 2 MPa), and when nitrogen gas is used as the blowing agent, its injecting pressure is in the range of 15 to 35 kg/cm² (1.5 to 3.5 MPa).

Low-density polyethylene is preferred as the polyethylene used in this invention. The process of this invention makes it possible to obtain a polyethylene foam having a uniform and fine cellular structure and excellent surface smoothness. The polyethylene foam has superior sealability, and can be conveniently used, for example as packings of crown caps in beer bottles or packings for containers of cosmetics, etc. It also finds applications as agricultural materials, filling materials, thermally insulating agents, and cushioning materials.

In a preferred embodiment of the process of this invention, polyethylene is mixed with the tartaric acid and the carbonate or bicarbonate as a nucleus-forming agent in the amounts specified hereinabove, and the mixture is fed into an extruder to melt it. Nitrogen gas or carbon dioxide gas is forced into the molten mixture in the extruder through a port provided in the extruder. The materials are uniformly mixed by a screw mounted within the extruder and transported to a T-die, circular die or other

2

suitable die fitted to the end of the extruder, and extruded at a temperature above the softening point of the polyethylene continuously into such a shape as a sheet, tube or rod.

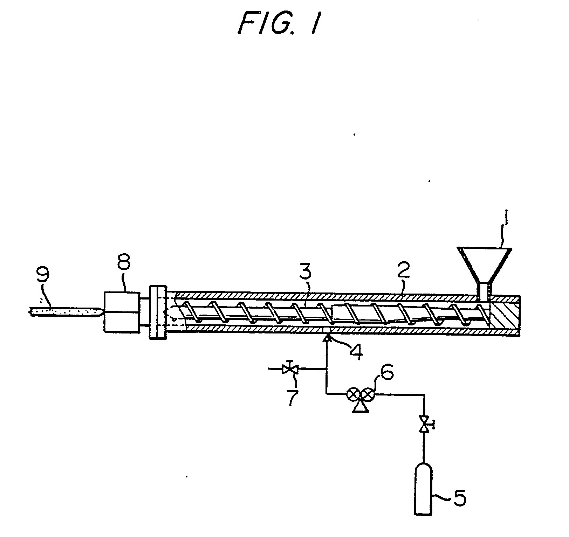

One embodiment of the process of this invention is illustrated with reference to the accompanying Figure 1 which is a sectional front elevation for illustrating one embodiment of the process of the invention.

A uniform pre-mixture of polyethylene, the tartaric acid and the carbonate or bicarbonate is fed into a hopper 1, and uniformly melted by a heated cylinder 2 and a screw 3 until it reaches a port 4 for injecting a blowing agent. Nitrogen gas or carbon dioxide gas contained in a bomb 5 is adjusted to a pressure corresponding to the density of the desired polyethylene foam by a pressure-adjusting device 6, and forced into the port 4 *via* a check valve 7. By the screw 3, the molten mixture and the blowing agent are uniformly mixed, and the mixture is extrusion-foamed at a temperature above the softening point of polyethylene through a die 8 to produce a polyethylene foam 9.

All extruders which are conveniently used for expansion and have a gas injecting port can be used. The extruding temperature is above the softening point of the polyethylene, and the temperature of the die is preferably 115 to 130°C., especially 120 to 125°C. Preferably, in the heated cylinder 2 of the extruder shown in Figure 1, that zone which is on the right side of the blowing agent injecting port 4 is maintained at a temperature of 150 to 160°C, and that zone which is on the left side of the port 4, at a temperature of 120 to 125°C.

The amount of the polyethylene foam extruded varies depending upon the size of the extruder, but with an extruder having a screw diameter of 65 mm, the polyethylene foam is extruded preferably at a rate of 20 to 30 kg/hr.

The following Examples illustrate the present invention more specifically.

### Example 1

One hundred parts by weight of low-density polyethylene (density 0.924 $g/cm^3$) was mixed uniformly with 0.01 part by weight of tartaric acid and 0.1 part by weight of sodium carbonate. The mixture was fed into an extruder having a screw diameter of 65 mm and an L/D ratio of 32 and equipped with a 500 mm wide T-die at its end, and nitrogen gas was forced into the extruder under a pressure of 16 $kg/cm^2$ (1.6 MPa) through an injecting port provided in the extruder. The mixture was extruded into a foamed sheet at a rate of 20 kg/hr. That zone of the extruder which was upstream of the blowing agent injecting port was maintained at 150°C, and that zone of the extruder which was downstream of the injecting port was maintained at 120 to 125°C. The temperature of the die was maintained at 125°C.

The resulting polyethylene foam had a density of 0.50 $g/cm^3$, and a cell diameter of 100 to 150 $\mu$m with a very smooth surface. It could be favorably used as a sheet packing.

### Examples 2 to 4 and Comparative Examples 1 to 3

Polyethylene foams were produced in the same way as in Example 1 except that tartaric acid and sodium bicarbonate were used in the amounts indicated in Table 1 and the type of the blowing agent and the pressure was changed as shown in Table 1. The results are shown in Table 1.

## TABLE 1

| Example (Ex.) or Comparative Example (CEx.) | Nucleus-forming agent (parts) | | Blowing agent (pressure kg/cm²-MPa) | Density of the foam (g/cm³) | Cell diameter (μm) | Surface smoothness |
|---|---|---|---|---|---|---|
| | Tartaric acid | Sodium bicarbonate | | | | |
| Ex. 2 | 0.02 | 0.2 | $N_2$ (20—2) | 0.43 | 100—200 | ◎ |
| Ex. 3 | 0.05 | 0.2 | $N_2$ (16—1.6) | 0.5 | 100—200 | ◎ |
| Ex. 4 | 0.05 | 0.2 | $CO_2$ (14—1.4) | 0.42 | 200—300 | O |
| CEx. 1 | 0.02 | 0.5 | $N_2$ (16—1.6) | 0.5 | 400—500 | Δ |
| CEx. 2 | 0.5 | 0.5 | $CO_2$ (14—1.4) | 0.43 | 600—700 | X |
| CEx. 3 | 0.02 | 0.2 | 1,2-dichloro-tetrafluoro-ethane | 0.5 | 500—600 | X |

The surface smoothness is the evaluation of the surface condition of a sample which represents usability or non-usability as a sheet packing.

◎ : Very smooth (usable).

O : Smooth (usable).

Δ : Uneven (not usable).

X : Very uneven (not usable).


### Example 5

A polyethylene foam was produced in the same way as in Example 1 except that the pressure of $N_2$ gas was changed to 20 kg/cm². The resulting foam had a very smooth surface, a density of 0.43 g/cm³ and a cell diameter of 150 to 200 μm.

### Comparative Examples 4 to 7

When polyethylene foams were produced in the manner of Example 5 but using either organic acids (citric and malonic) rather than tartaric acid and either sodium bicarbonate or sodium carbonate, the cell diameter increased and the foam surface was less smooth. The results are shown in Table 2.

**0 041 380**

TABLE 2

| Comparative Example | Nucleus-forming agents (parts) | | Blowing agent | Density of the foam ($g/cm^3$) | Cell diameter ($\mu m$) | Surface smoothness |
|---|---|---|---|---|---|---|
| 4 | Citric acid (0.01) | Sodium bicarbonate (0.1) | $N_2$ | 0.43 | 250—350 | O |
| 5 | Citric acid (0.01) | Sodium carbonate (0.1) | $N_2$ | 0.43 | 200—300 | O |
| 6 | Malonic acid (0.01) | Sodium bicarbonate (0.1) | $N_2$ | 0.43 | 200—300 | O |
| 7 | Malonic acid (0.01) | Sodium carbonate (0.1) | $N_2$ | 0.43 | 200—300 | O |

**Claims**

1. A process for producing a polyethylene foam by extruding a mixture of polyethylene, an organic acid, a salt of carbonic acid and a gaseous blowing agent, at a temperature above the softening point of the polyethylene, characterised by mixing 100 parts by weight of polyethylene with 0.1 to 0.4 parts by weight of a carbonate or bicarbonate and 0.01 to 0.1 parts by weight of tartaric acid, the weight ratio of tartaric acid to the carbonate or bicarbonate being from 1:4 to 1:10, and with nitrogen gas or carbon dioxide gas as a blowing agent, and extruding the mixture.

2. A process according to claim 1, wherein the bicarbonate is sodium bicarbonate.

3. A process according to claim 1 or 2, wherein the polyethylene is mixed with the carbonate or bicarbonate and the tartaric acid, the mixture is fed to an extruder (2) to melt the polyethylene, nitrogen gas or carbon dioxide gas as blowing agent is forced into the molten mixture in the extruder (2) through a part (4) provided in the extruder (2), the materials are uniformly mixed by a screw (3) within the extruder (2), and the resulting molten mixture containing blowing agent is extruded continuously through a die (8) to provide a foam (9).

**Patentansprüche**

1. Verfahren zur Herstellung eines Polyethylen-Schaumstoffs durch Extrudieren eines Gemisches aus Polyethylen, einer organischen Säure, einem Salz der Kohlensäure und einem gasförmigen Treibmittel bei einer Temperatur oberhalb des Erweichungspunktes von Polyethylen, dadurch gekennzeichnet, daß man 100 Gew.-Teile Polyethylen mit 0,1 bis 0,4 Gew.-Teilen eines Carbonats oder Bicarbonats und mit 0,01 bis 0,1 Gew.-Teilen Weinsäure, wobei das Gewichtsverhältnis von Weinsäure zu dem Carbonat oder Bicarbonat 1:4 bis 1:10 beträgt, und mit Stickstoffgas oder Kohlendioxidgas als Treibmittel mischt und das Gemisch extrudiert.

2. Verfahren nach Anspruch 1, bei dem das Bicarbonat Natriumbicarbonat ist.

3. Verfahren nach Anspruch 1 oder 2, bei dem das Polyethylen mit dem Carbonat oder Bicarbonat und der Weinsäure vermischt und das Gemisch in einen Extruder (2) aufgegeben wird, um das Polyethylen zu schmelzen, Stickstoffgas oder Kohlendioxidgas als Treibmittel durch eine im Extruder (2) vorgesehene Öffnung (4) in das geschmolzene Gemisch im Extruder (2) eingeführt, die Komponenten gleichförmig mit einer Schnecke (3) innerhalb des Extruders (2) gemischt und das erhaltene geschmolzene Gemisch, enthaltend das Treibmittel, kontinuierlich durch einen Spritzkopf (8) zu einem Schaumstoff (9) extrudiert wird.

5

# 0 041 380

**Revendications**

1. Procédé pour préparer une mousse de polyéthylène par extrusion d'un mélange de polyéthylène, d'un acide organique, d'un sel d'acide carbonique et d'un agent porogène gazeux, à une température supérieure au point de ramollissement du polyéthylène, caractérisé par le fait qu'il consiste à mélanger 100 parties en poids de polyéthylène avec 0,1 à 0,4 partie en poids d'un carbonate ou d'un bicarbonate et 0,01 à 0,1 partie en poids d'acide tartrique, le rapport pondéral de l'acide tartrique au carbonate ou au bicarbonate étant de 1:4 à 1:10, et avec de l'azote gazeux ou du gaz carbonique comme agent porogène, et à extruder le mélange.

2. Procédé selon la revendication 1, caractérisé par le fait que le bicarbonate est le bicarbonate de sodium.

3. Procédé selon la revendication 1 ou 2, dans lequel le polyéthylène est mélangé avec le carbonate ou le bicarbonate et l'acide tartrique, le mélange est introduit dans une extrudeuse (2) pour fondre le polyéthylène, l'azote gazeux ou le gaz carbonique comme agent porogène est injecté sous pression dans le mélange fondu dans l'extrudeuse (2) par une partie (4) prévue dans l'extrudeuse (2), les matières sont mélangées uniformément par une vis (3) dans l'extrudeuse (2), et le mélange fondu résultant contenant l'agent porogène est extrudé en continu à travers une filière (8) pour donner une mousse (9).

6

## FIG. 1